Europäisches Patentamt

European Patent Office

Office européen des brevets

(19)

(11) Numéro de publication: **0 113 306**
**B1**

(12) **FASCICULE DE BREVET EUROPEEN**

(45) Date de publication du fascicule du brevet: **09.03.88**

(21) Numéro de dépôt: **83450030.8**

(22) Date de dépôt: **22.12.83**

(51) Int. Cl.⁴: **B 23 P 19/04, E 04 F 21/00**

(54) **Machine à poser les joints automatiquement dans les profilés.**

(30) Priorité: **29.12.82 FR 8222163**

(43) Date de publication de la demande:
**11.07.84 Bulletin 84/28**

(45) Mention de la délivrance du brevet:
**09.03.88 Bulletin 88/10**

(84) Etats contractants désignés:
**BE DE IT**

(56) Documents cités:
**FR-A-2 411 154**
**US-A-3 295 195**
**US-A-3 335 487**

(73) Titulaire: **Andreazza, Jean-Yves**
**Corme Royal**
**F-17600 Saujon (FR)**

(72) Inventeur: **Andreazza, Jean-Yves**
**Corme Royal**
**F-17600 Saujon (FR)**

(74) Mandataire: **Thébault, Jean-Louis**
**Cabinet Jean-Louis Thébault 50, Cours de**
**Verdun**
**F-33000 Bordeaux (FR)**

Courier Press, Leamington Spa, England.

EP 0 113 306 B1

## Description

La présente invention a trait à une machine destinée à introduire par enfilement des joints, en particulier du type balai, dans des gorges ménagées à cet effet dans des profilés notamment en menuiserie métallique.

Dans ce type de profilés, en particulier en aluminium extrudé, utilisés pour la fabrication de châssis, on utilise des joints du type balai logés dans des rainures spéciales ménagées dans le profilé. Ces joints habituellement constitués d'une base rigide destinée à être engagée dans la rainure-logement, généralement à section en forme de T, et d'une ou plusieurs rangées de poils formant balai, sont livrés en bobines chez les installateurs ou les menuisiers et posés manuellement dans les rainures appropriées des profilés.

La forme des joints et de leurs logements ne leur permet pas d'être posés en applique. Il faut donc les enfiler au préalable en atelier dans les profilés avant montage de l'huisserie, ce qui se réalise à la main.

Cette opération est fastidieuse, prend du temps et accapare, pour un travail sans intérêt, de la main d'oeuvre qu'il serait plus utile d'employer à des tâches plus valorisantes.

Des dispositifs ont déjà été réalisés pour essayer de supprimer ces opérations manuelles, mais ils présentent néanmoins de sérieux inconvénients.

C'est ainsi que le brevet US 3.335.487 a trait à un dispositif pour enfiler un joint-balai dans une rainure d'un profilé. Ce dispositif comporte des moyens forçant le joint à coulisser à l'intérieur de la rainure à garnir, mais il est nécessaire de contraindre l'extrémité du joint à faire saillie hors de la rainure, ce qui risque de poser de sérieux problèmes de mise en place en fonction de la section de la rainure, de celle du joint et de la rigidité de la bande plate constituant la base de ce dernier. Outre la difficulté de mise en place du joint, on risque de voir le dispositif se coincer à cause de forces de frottement importantes au droit de la fente de la rainure, lors de la mise en place du joint. Enfin, la pince de préhension de l'extrémité dépassante du joint, à laquelle est associé un bras formant une sorte de raclette contraignant le reste du joint à demeurer dans la rainure, ne peut garnir que des rainures totalement libres d'accès. En particulier, dans le cas de rainures se faisant face, le dispositif décrit dans ce brevet américain est totalement inutilisable.

On connaît également le brevet FR 2.411.154 qui concerne un dispositif pour enfiler des joints-balais dans des rainures de profilés, dans lequel on introduit les joints dans l'extrémité des rainures à garnir et on les pousse pour les forcer à cheminer à l'intérieur des rainures. Ce document servi de base pour l'élaboration du préambule, de la revendication 1.

Une telle technique présente de sérieux inconvénients du fait des forces de frottement et de la plus ou moins grande rigidité des joints. En effet, selon la nature du joint et la forme de la rainure à garnir, il est très difficile, voire impossible, la plupart du temps, de garnir des rainures de grande ou moyenne longueur.

Le but de l'invention est précisément de pallier les inconvénients des techniques et dispositifs connus de pose en proposant une machine apte à mettre en place automatiquement, rapidement et aisément des joints, en particulier du type balai, dans des profilés de menuiserie métallique, quelles que soient la configuration et la tenue des joints, ainsi que la section et la longueur de la rainure à garnir.

A cet effet, l'invention a pour objet une machine à poser automatiquement des joints, notamment du type balai ou analogue, qui comprennent une base à enfiler dans une rainure appropriée, d'un profilé, cette machine comportant des moyens pour amener un ou plusieurs joints à enfiler dans une tête de guidage pourvue d'un ou plusieurs conduits de passage dont la section est analogue à celle de la ou des rainures de réception des joints cette tête de guidage étant montée amovible sur la table portant le profilé à garnir des moyens pour postionner un ou plusieurs profilés à garnir, de façon que leurs rainures-logements soient dans l'axe desdits conduits de guidage, des moyens pour entraîner le ou les joints sur une certaine distance préfixée réglable, à partir de ladite tête de guidage, et des moyens pour sectionner le ou les joints ainsi enfilés, au ras de l'extrémité du ou des profilés tournée vers la tête de guidage, ladite machine étant caractérisée en ce que lesdits moyens d'entraînement entraînent le ou les joints (4) par traction et se composent d'un organe d'entraînement porte par un chariot déplaçable le long d'une glissière et entraîné par un moyen moteur approprié entre deux positions délimitées par des fins de course réglables en position et commandant les déplacements dudit chariot ainsi que la désolidarisation dudit organe d'entraînement et du joint entraîné en fin de course aller du chariot ce dit organe d'entraînement comportant un organe actif disposé en regard de l'orifice latérale dudit conduit de passage et mobile en translation parallèlement à l'axe de ce dernier et de la rainure à garnir du profilé, disposée dans le prolongement l'organe actif servant à prendre en charge le ou les joints toujours en place dans la rainure de guidage correspondante.

L'organe d'entraînement peut être un dispositif en forme de pince capable d'enserrer la partie du joint demeurant extérieure à la rainure-logement, la pince étant desserrée au retour de l'organe à sa position de départ.

Cet organe peut également être constitué par un doigt ou ergot mobile capable de coincer une partie du joint contre une paroi de la rainure de la tête de guidage, puis de la rainure à garnir située dans le prolongement, de façon à contraindre le joint à glisser le long de la rainure, le doigt ou ergot d'entraînement étant escamoté au retour à sa position de départ.

Avantageusement, la machine est équipée d'un système d'amenage et de positionnement automatique un à un des profilés à garnir sur la table.

La tête de guidage peut être également multiple et associée à plusieurs organes d'entraînement fonctionnant indépendamment ou simultanément afin de garnir par exemple en même temps plusieurs rainures appartenant au même profilé ou à plusieurs profilés disposés côte à côte sur la table.

Des modes de réalisation de la machine selon l'invention ressortiront de la description qui va suivre description donnée à titre d'exemple uniquement et en regard des dessins annexés sur lesquels:

— Figure 1 représente schématiquement une vue en élévation d'une machine conforme à l'invention;

— Figure 2 représente une coupe transversale d'un profilé garni de deux joints balais en face à face et de l'organe d'entraînement des joints, suivant un mode de réalisation, et

— Figure 3 représente une vue en perspective partielle d'un second mode de réalisation de l'organe d'entraînement des joints.

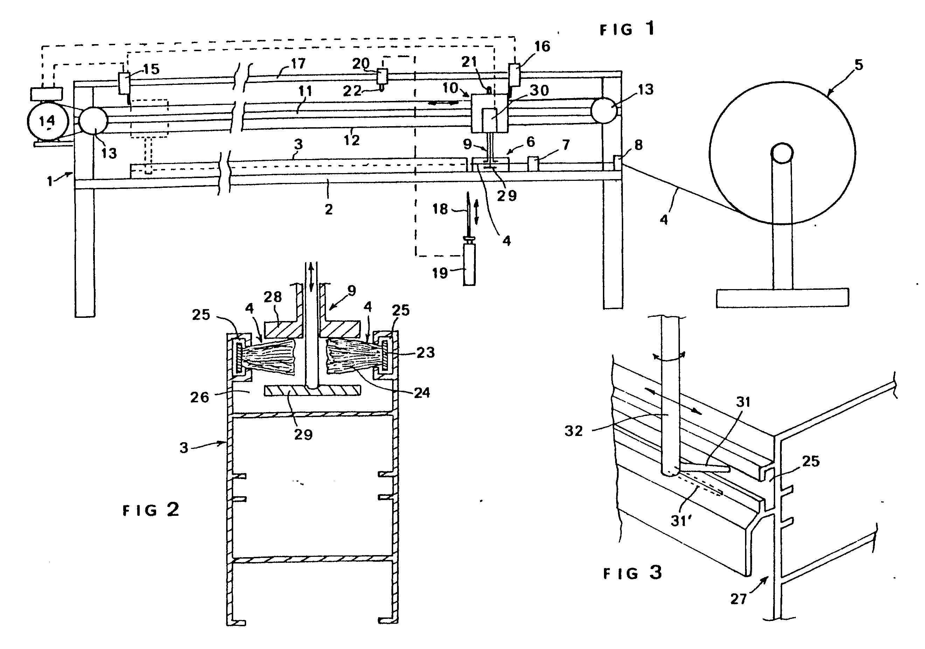

La figure 1 illustre un mode de réalisation très schématique d'une machine selon l'invention, et montre les éléments essentiels mis en oeuvre pour mettre en place des joints du type balai dans des rainures ménagées à cet effet dans des profilés, notamment des profilés d'aluminium extrudés tels que celui représenté à la figure 2, utilisés en huisserie métallique.

La machine représentée en figure 1 comprend un bâti 1 sur pieds portant une table horizontale 2 sur laquelle sont posés et fixés les profilés 3.

Le joint 4, par exemple le joint balai de la figure 2, est stocké en bobine 5 et son extrémité libre est introduite dans une tête de guidage 6 montée sur la table 2 après passage dans deux pré-guides 7 et 8 également fixés sur la table.

La tête de guidage et les pré-guides 7 et 8 offrent une section de passage au joint 4 qui est bien entendu identique à la section du joint à poser.

Au droit de la tête de guidage 6 se tient un organe 9 d'entraînement du joint porté par un chariot 10 mobile en translation horizontale le long d'une glissière 11 fixée au bâti 1 de la machine. L'entraînement du chariot 10 est assuré par exemple par une chaîne ou courroie sans fin 12 tendue entre deux pignons ou poulies 13 dont l'une est entraînée en rotation par un ensemble moto-réducteur 14 supporté par le bâti 1.

Des micro-contacts 15, 16 de fin de course, réglables en position le long d'une réglette 17 parallèle à la glissière 11, délimitent la longueur de course aller-retour du chariot 10 et commandent, l'un (15), l'inversion du sens de déplacement du chariot 10 ainsi que la désolidarisation de l'organe d'entraînement 6 et du joint 4, et, l'autre (16), l'arrêt du chariot au retour en position de départ.

Un organe de coupe du joint 4 symbolisé par la lame 18 de forme appropriée, mue à va-et-vient par un moyen moteur approprié tel qu'un vérin pneumatique 19 par exemple, solidaire du bâti 1, est chargé de couper le joint 4 qui vient d'être enfilé dans le profilé 3 au ras de l'extrémité de ce dernier tournée vers la tête de guidage 6. Un intervalle de passage suffisant est réservé à la lame 17 entre la tête 6 et le profilé 3.

Le vérin 19 est commandé par un dispositif sensible 20 réglable en position le long de la réglette 17 et sollicité par le chariot 10, des moyens étant prévus pour que l'organe 20 ne commande un cycle aller-retour du vérin 19 qu'au voyage retour du chariot 10.

Ce moyen qui permet de ne prendre en compte qu'un signal de passage sur deux du chariot 10 devant l'organe 20, peut être réalisé de bien des manières connues suivant la technologie utilisée (par exemple mécanique, électrique, magnétique etc.). S'il s'agit par exemple d'un dispositif mécanique du type roue à cliquet ou à came escamotable, le montage sera tel qu'au voyage aller du chariot 10 l'organe d'actionnement 21 du chariot déplacera ou effacera l'organe actif 22 du dispositif 20 sans effet sur celui-ci, alors qu'au retour l'organe 21 actionnera positivement le dispositif 20 et commandera la coupe. Le dispositif sensible 20 est placé le long de la réglette 17 de façon que la lame 18 se soit écartée de la trajectoire du chariot 10 avant l'arrivée de celui-ci.

Le joint 4 représenté en figure 2 est un joint balai comportant une base 23 constituée par une bande plate relativement rigide sur laquelle sont rapportées des fibres souples 24 serrées de manière à former une barrière continue comme une tête de balai. Ce type de joint, parfaitement connu, est appelé à garnir différents types de profilés métalliques tels que le profilé 3 de la figure 2. A cet effet, ces profilés comportent selon leur type une ou deux rainures 25 à section en T conformées sur certains flancs du profilé, intérieurement ou extérieurement.

Le profilé 3 de la figure 2 comporte deux rainures 25 identiques se faisant vis-à-vis au droit de l'une des faces du profilé. Les rainures 25 débouchent dans un canal 26 délimité dans le profilé et doivent recevoir deux joints 4 disposés en opposition et destinés à assurer l'étanchéité aussi bien vis-à-vis de l'air que de l'eau, à la manière bien connue.

Les pré-guides 7 et 8 de la machine, dont le rôle est de bien positionner le joint 4 en le lissant, sont de simples pièces, amovibles, réglables en position le long de la table 2 et définissant des orifices de passage correspondant aux forme et section du joint 4 à enfiler. Dans le case de la figure 2 ces pièces 7 et 8 offrent une section de passage en T analogue aux rainures 25.

La tête de guidage 6 est munie d'un orifice de passage correspondant également au joint.

La tête 6 est avantageusement constituée d'un simple tronçon de profilé du type à garnir, la ou les rainures 25 de ce tronçon, selon que le profilé à garnir est le profilé 27 de la figure 3 à une seule rainure 25 externe ou le profilé 3 de la figure 2 à deux rainures 25 internes, servant de guide de passage pour le joint.

Dans les pièces 6, 7 et 8 le joint 4 est présenté à plat, c'est-à-dire avec la base 23 verticale.

La tête 6 est amovible afin d'équiper la machine de différentes têtes correspondant à différents types de joint. La tête 6 est montée sur la table 2 de façon à permettre son éventuel ajustement en position, suivant les trois directions, en regard du profilé 3.

Ce dernier est positionné lui-même sur la table 2 de façon que sa ou ses rainures 25 soient dans l'alignement avec la ou les rainures ou orifices de guidage homologues de la tête 6. Divers moyens sont utilisables pour assurer un tel positionnement ou calage correct du profilé 3 sur la table 2 et son verrouillage durant l'enfilage des joints.

L'organe 9 d'entraînement des joints représenté sur la figure 2 est un organe double permettant l'enfilage simultané des deux joints 4 en opposition de la figure 2.

A cet effet, l'organe 9 est constitué d'une pince comprenant un mors 28 fixe, solidaire du chariot 10 et un mors 29 mobile, également porté par le chariot 10 mais déplaçable verticalement suivant la double flèche de la figure 2 à l'aide par exemple d'un petit vérin pneumatique 30 fixé au chariot 10 et disposé à l'aplomb de la tête 6.

La pince 28, 29 est conformée et dimensionnée de façon à courrir librement, aussi bien en position de serrage des deux balais 24 qu'en position de non serrage, sur toute la longueur du canal 26 du profilé et dans la tête de guidage 6.

La mise en place des deux joints 4 de la figure 2 s'opère de la manière suivante. Les extrémités de deux joints 4 provenant de deux bobines 5 disposées côte-à-côte de manière à présenter correctement les joints sont engagées dans les pré-guides 8, 7, puis dans la tête 6 constituée par exemple par un tronçon du profilé 3 de la figure 2. L'extrémité des deux joints affleurent l'extrémité de la tête 6 en regard du profilé 3 convenablement positionné, la pince 28, 29 étant bien entendu ouverte. La machine est alors prête à enfiler les joints.

La commande de mise en marche de la machine entraîne successivement le serrage des profilés sur la table 2, de la pince 28, 29, puis le démarrage vers la gauche du chariot 10 à partir de la position représentée sur la figure 1.

Les mors 28, 29 (dont les faces actives sont éventuellement crantées) enserrent les deux balais 24 et entraînent avec eux les deux joints 4 qui s'enfilent dans l'extrémite en regard des rainures 25 du profilé 3.

La course du chariot 10 est arrêtée par le micro-contact 15 lorsque l'extrémité des deux joints 4 atteignent l'extrémité des rainures 25 ou tout autre points, au choix, le long de ces rainures et, aussitôt, grâce au micro-contact 15, la pince 28, 29 est desserrée et le chariot 10 repart en sens inverse par inversion de la commande du moteur 14 par le micro-contact 15.

Au cours du trajet retour du chariot 10, l'organe 21 commandera au passage au droit du dispositif sensible 20 la coupe des joints 4 par la lame 18.

En fin de course retour du chariot 10, le micro-contact arrête le moteur 14 en inversant son sens de marche pour le cycle suivant.

A l'arrêt du chariot 10 la pince 28, 29 est ouverte et au droit de la tête de guidage 6, prête à prendre en charge les deux joints toujours en place dans les rainures de guidage de la tête.

L'organe d'entraînement 9 de la figure 2 peut entraîner deux joints 4 simultanément ou un seul. L'organe 9 peut comporter une pince simple ne prenant en charge qu'un seul joint à la fois.

Plusieurs organes tels que 9 peuvent être montés côte à côte, portés par le même chariot 10 et coopérant avec plusieurs têtes de guidage 6 également disposées côte à côte sur la table 2.

De tels organes 9 sont commandés individuellement ou simultanément ce qui permet de garnir plusieurs profilés 3 placés côte à côte sur la table 2 et qu'ils soient de même type ou non, pourvu que les têtes de guidage 6 et pré-guides 7, 8 concernés correspondent aux divers types de joint.

Avantageusement, en particulier dans le cas de garnissage des profilés un à un, on munit la machine d'un dispositif automatique d'amenage un à un des profilés à partir d'un magasin de stockage, de positionnement correct du profilé sur la table, de son verrouillage en position et de son évacuation, le cycle de fonctionnement de la machine se répétant automatiquement.

L'organe d'entraînement 9 peut bien entendu avoir une autre configuration que celle représentée et décrite. Le balai 24 peut être serré ou pincé par d'autres moyens.

L'entraînement des joints le long de leur rainurelogement peut aussi se faire en appliquant la base 23 contre le fond de la rainure 25 et en la contraignant à glisser le long de celle-ci.

La figure 3 illustre un teil moyen qui peut être constitué d'un doigt ou ergot 31 horizontal monté à l'extrémité d'un arbre vertical 32 porté par le chariot 10 et rotatif de façon à engager le doigt 31 à l'intérieur de la rainure 25 ou à l'effacer (position 31, figure 3) en le mettant parallèle à la rainure.

En position d'engagement dans la rainure 25, le doigt 31 applique le joint contre le fond de la rainure et le déplacement du doigt dans la rainure, lorsque le chariot 10 se déplace, entraîne le joint. Au retour du chariot, le doigt est effacé et revient au droit de la tête 6, prêt à prendre en charge un nouveau joint dès la rotation de l'arbre 32.

L'invention peut s'appliquer à d'autres types de joint que celui représenté, c'est-à-dire de structure et de formes différentes et en d'autres matériaux pourvu que ces joints se prêtent à une mise en place par enfilage dans leur logement et quelle que soit la nature du profilé.

## Revendications

1. Machine à poser automatiquement des joints, notamment du type balai ou analogue, qui comprennent et base (23) a enfiler dans une rainure appropriée d'un profilé, cette machine comportant des moyens (7, 8) pour amener un ou plusieurs joints (4) à enfiler dans une tête de guidage (6) pourvue d'un ou plusieurs conduits de passage dont la section est analogue à celle de la ou des rainures (25) de réception des joints cette tête de guidage étant montée amovible sur la table (2) portant le profilé (3) à garnir des moyens pour positionner un ou plusieurs profilés à garnir (3) de façon que leurs rainures-logements (25) soient dans l'axe desdits conduits de guidage (6), des moyens (9, 10) pour entraîner le ou les joints (4) sur une certaine distance préfixée réglable, à partir de ladite tête de guidage (6), et des moyens (18) pour sectionner le ou les joints (4) ainsi enfilés, au ras de l'extrémité du ou des profilés (3) tournée vers la tête de guidage (6), ladite machine étant caractérisée en ce que lesdits moyens d'entraînement entraînent le ou les joints (4) par traction et se composent d'un organe d'entraînement (9) lesdits moyens d'entraînement (9, 10) porté par un chariot (10) déplaçable le long d'une glissière (11) et entraîné par un moyen moteur approprié (14) entre deux positions délimitées par des fins de course (15, 16) réglables en position et commandant les déplacements dudit chariot (10) ainsi que la désolidarisation dudit organe d'entraînement (9) et du joint (4) etraînément en fin de course aller du chariot, ce dit organe d'entraînement (9) comportant un organe actif (28, 29, 31) disposé en regard de l'orifice latérale dudit conduit de passage et mobile en translation parallèlement à l'axe de ce dernier et de la rainure (25) à garnir du profilé (3), disposée dans le prolongement l'organe actif (28, 29, 31) servant à prendre en charge le ou les joints toujours en place dans le rainure de guidage correspondante.

2. Machine suivant la revendication 1, caractérisée en ce que la tête de guidage (6) est constituée par un tronçon du profilé (3) à garnir.

3. Machine suivant l'une des revendication 1 et 2, caractérisée en ce que l'organe actif est une pince solidaire dudit chariot (10) et comprenant deux morts (28, 29) mobiles l'un relativement à l'autre, lesdits mors étant commandés par des moyens appropriés (30) portés par le chariot et susceptibles d'enserrer la partie balai (24) du joint (4) faisant saillie hors de la rainure-logement (25).

4. Machine suivant l'une des revendications 1 et 2, caractérisée en ce que l'organe actif est un doigt ou ergot (31) porté par un arbre (32) solidaire dudit chariot (10) et monté rotatif entre deux positions dont l'une engage ledit doigt (31) à l'intérieur de ladite rainure-logement (25) en sorte de plaquer le joint (4) contre le fond de la rainure-logement et dont l'autre position efface complètement le doigt.

5. Machine suivant la revendication 1, caractérisée en ce que la tête de guidage (6) est multiple et comporte plusieurs conduits de passage en parallèle auxquels sont associés plusieurs organes d'entraînement (9) en parallèle, commandés sélectivement ou simultanément en vue d'enfiler plusieurs joints (4) dans plusieurs rainures (25) d'un ou plusieurs profilés (3) disposés côte à côte.

6. Machine suivant l'une des revendications 1, 2, ou 5, caractérisée en ce que l'organe actif est une pince double dont les mors (28, 29) sont conformés de manière à prendre en charge simultanément les parties balais (24) de deux joints (4) disposés en opposition (figure 2).

7. Machine suivant l'une des revendications 1 à 6, caractérisée en ce qu'elle comporte des moyens d'amenage, de positionnement, de verrouillage, de déverrouillage et d'évacuation automatique un à un des profilés à garnir (3).

8. Machine suivant l'une des revendications 1 à 7, caractérisée en ce que lesdits moyens de coupe du ou des joints (4) sont constitués par une lame de conformation appropriée (18), mue à va-et-vient par des moyens appropriés (19) commandés au cours du trajet retour desdits moyens (9, 10) d'entraînement des joints.

**Patentansprüche**

1. Gerät zum automatischen Anbringen von Dichtungen, insbesondere vom Bürstentyp o.dgl., die eine Basis (23) zum Einführen in eine geeignete Nut eines Profilstabs umfassen, wobei das Gerät Mittel (7, 8) zum Zuführen einer oder mehrerer Dichtungen (4) zum Einführen in einen Kopf einer Führung (6), die mit einer oder mehreren Durchtritten, deren Querschnitt analog zu demjenigen der Nut(en) (25) zur Aufnahme der Dichtungen ist, versehen ist, wobei dieser Kopf der Führung auswechselbar auf dem den zu bestükkenden Profilstab (3) tragenden Tisch (2) montiert ist, Mittel zum Positionieren eines oder mehrerer zu bestückender Profilstäbe (3) in der Weise, daß seine nutförmigen Sitze (25) in der Achse der besagten Durchtritte der Führung (6) verlaufen, Mittel (9, 10) zum Mitnehmen der Dichtung(en) (4) über eine einstellbare, vorher festgelegt, bestimmte Distanz ausgehend von dem besagten Kopf der Führung (6) und Mittel (18) zum Durchtrennen der so eingeführten Dichtung(en) (4) bündig zum Ende des oder der gegen den Kopf der Führung (6) gewandten Profile (3) umfaßt, wobei das Gerät dadurch gekennzeichnet ist, daß die besagten Mitnahmemittel (9, 10) die Dichtung(en) (4) durch Zug mitnehmen und aus einem Mitnahmeorgan (9) bestehen, das von einem Schlitten (10) getragen wird, der längs einer Führungsschiene (11) verschiebbar und durch ein geeignetes Antriebsmittel (14) zwischen zwei Positionen antreibbar ist, die durch in ihrer Position einstellbare Laufwegenden begrenzt sind und die Verschiebungen des Schlittens (10) ebenso wie das Trennen des besagten Mitnahmeorgans (9) und der mitgenommenen Dichtung (4) am Lufwegende · des Schlittens betätigt, wobei dieses besagte Mitnahmeorgan (9) ein aktives Organ (28, 29, 31) umfaßt, das gegenüber von der seitlichen Öffnung des besagten Durchtritts angeordnet und translatorisch parallel zur Achse diese letzteren und der zu bestückenden Nut (25) des in der Verlängerung angeordneten Profilstabs (3) beweglich ist, wobei das aktive Organ (28, 29, 31) dazu dient, die Dichtung(en) immer an ihrer Stelle in der entsprechenden Nut der Führung in Zuführposition zu halten.

2. Gerät gemäß Anspruch 1, dadurch gekennzeichnet, daß der Kopf der Führung (6) durch einen Abschnitt des zu bestückenden Profilstabs (3) gebildet wird.

3. Gerät gemäß einem der Ansprüche 1 und 2, dadurch gekennzeichnet, daß das aktive Organ eine fest am besagten Schlitten (10) angeordnete Klemme ist, die zwei relativ zueinander bewegliche Backen (28, 29) besitzt, wobei die Backen durch geeignete Mittel (30) betätigt werden, die von dem Schlitten getragen werden, und fähig sind, den Bürstenteil (24) der Dichtung (4), der aus dem nutförmigen Sitz (25) herausragt, zu klemmen.

4. Gerät gemäß einem der Ansprüche 1 und 2, dadurch gekennzeichnet, daß das aktive Organ ein Finger oder eine Nase (31) getragen von einer Welle (32) ist, die an dem besagten Schlitten (10) befestigt und zwischen zwei Positionen drehbar montiert ist, wobei in einer hiervon der besagte Finger (31) in das Innere des besagten nutförmigen Sitzes (25) derart eingreift, daß die Dichtung (4) gegen den Boden der nutförmigen Dichtung gedrückt wird, und in der anderen Position der Finger vollständig außerhalb ist.

5. Gerät gemäß Anspruch 1, dadurch gekennzeichnet, daß der Kopf der Führung (6) ein Mehrfachkopf ist und mehrere parallele Durchtritte besitzt, denen mehrere parallele Mitnahmeorgane (9) zugeordnet sind, die wahlweise oder gleichzeitig zum Einführen mehrerer Dichtungen (4) in mehrere Nuten (25) des oder mehrerer Profilstäbe (3), die nebeneinander angeordnet sind, betätigt werden.

6. Gerät gemäß einem der Ansprüche 1, 2 oder 5, dadurch gekennzeichnet, daß das aktive Organ eine Doppelklemme ist, deren Backen (28, 29) derart gestaltet sind, daß sie gleichzeitig die Bürstenteile (24) von zwei gegenüberliegend angeordneten Dichtungen (4) ergreifen (Fig. 2).

7. Gerät gemäß einem der Ansprüche 1 bis 6, dadurch gekennzeichnet, daß es Mittel zum automatischen Zuführen, Positionieren, Verriegeln, Entriegeln und Abführen von aufeinanderfolgenden zu bestückenden Profilstäben (3) aufweist.

8. Gerät gemäß einem der Ansprüche 1 bis 7, dadurch gekennzeichnet, daß die besagten Mittel zum Schneiden der Dichtung(en) (4) durch eine Klinge (18) geeigneter Form gebildet werden, die durch geeignete Mittel (19), die während des Rücklaufs der besagten Mittel (9, 10) zum Mitnehmen von Dichtungen betätigt werden, hin- und herbeweglich ist.

**Claims**

1. Machine for automatically laying seals, particularly of the brush or similar type, which include a base (23) to be fitted into an appropriate groove of a profiled section, this machine comprising means (7, 8) for bringing one or more seals (4) to be fitted into a guide head (6) having one or more passage ducts whose section is similar to that of the groove or grooves (25) receiving the seals, this guide head being removably mounted on the table (2) carrying the profiled section (3) to be supplied, means for positioning one or more profiled sections to be supplied (3) so that their housing grooves (25) are in the axis of said guide ducts (6), means (9, 10) for driving the seal or seals (4) over a certain adjustable prefixed distance, from said guide head (6), and means (18) for cutting the thus fitted seal or seals (4), level with the end of the profiled section or sections (3) turned towards the guide head (6), said machine being characterized in that said drive means (9, 10) drive the seal or seals (4) by traction and are formed of a drive member (9) carried by a carriage (10) movable along a slide (11) and driven by an appropriate drive means (14) between two positions defined by end of travel stops (15, 16) adjustable in position and controlling the movements of said carriage (10) as well as the separation of said drive member (9) and of the seal (4) driven to the outgoing end of travel of the carriage, said drive member (9) comprising an active member (28, 29, 31) disposed opposite the side orifice of said passage duct and movable in translation parallel to the axis of this latter and of the groove (25) of the profile section (3) to be fitted, disposed in the extension, the active member (28, 29, 31) serving for taking over the seal or seals still in position in the corresponding guide groove.

2. Machine according to claim 1, characterized in that the guide head (6) is formed by a portion of the profiled section (3) to be supplied.

3. Machine according to one of claims 1 and 2, characterized in that the active member is a gripper integrally secured to said carriage (10) and having two jaws (28, 29) movable relatively to each other, said jaws being controlled by appropriate means (30) carried by the carriage and capable of clamping the brush part (24) of the seal (4) projecting from the housing groove (25).

4. Machine according to one of claims 1 and 2, characterized in that the active member is a finger or spur (31) carried by a shaft (32) integrally secured to said carriage (10) and mounted for rotation between two positions in one of which said finger (31) is engaged inside said housing groove (25) so as to apply the seal (4) against the bottom of the housing groove and in the other position of which the finger is completely retracted.

5. Machine according to claim 1, characterized in that the guide head (6) is multiple and includes several parallel passage ducts with which are associated several parallel drive members (9), controlled selectively or simultaneously for fitting several seals (4) into several grooves (25) of one or more profiled sections (3) disposed side by side.

6. Machine according to one of claims 1, 2 or 5, characterized in that the active member is a double gripper whose jaws (28, 29) are shaped so as to take over simultaneously the brush parts (24) of two seals (4) disposed in opposition (Fig. 2).

7. Machine according to one of claims 1 to 6, characterized in that it comprises means for feeding, positioning, locking, unlocking and automatic discharge of the profiled sections to be supplied (3), one by one.

8. Machine according to one of claims 1 to 7, characterized in that said means for cutting the seal or seals (4) are formed by a blade of appropriate shape (18), driven with reciprocal movement by appropriate means (19) controlled during the return travel of said means (9, 10) driving the seals.

FIG 1

FIG 3

FIG 2